# EUROPÄISCHE PATENTSCHRIFT

(11) **EP 2 000 061 B1**
(45) Veröffentlichungstag und Bekanntmachung des Hinweises auf die Patenterteilung: **09.06.2010**
(21) Anmeldenummer: 08001766.8
(22) Anmeldetag: 31.01.2008
(51) Int. Cl.: A47J 27/092, A47J 27/08

(54) **Überdruck-Kochtopf**
High pressure cooking pot
Plat de cuisson à surpression

(30) Priorität: 09.03.2007 DE 202007003676 U
(43) Veröffentlichungstag der Anmeldung: 10.12.2008
(73) Patentinhaber: Synkrona AG, 6370 Stans (CH)
(72) Erfinder: Schultz, Horst, 65239 Hochheim (DE)
(74) Vertreter: Blumbach - Zinngrebe

(56) Entgegenhaltungen:
- DE-U1- 20 201 624

## Beschreibung

Die Erfindung bezieht sich auf einen Deckel für einen Überdruck-Kochtopf, sowie einen Überdruck-Kochtopf, der einen Behälter mit einer Behälteröffnung und einem gebogenen Schüttrand sowie einen Deckel mit einer Schließvorrichtung und einem Ventil umfasst.

Ein derartiger Überdruck-Kochtopf ist aus der DE 202 01 624 U1 bekannt. Dieser Überdruck-Kochtopf weist eine Schließvorrichtung auf, bei der ein drehbarer Griff vorgesehen ist, um eine Kurbelscheibe und daran angelenkte Verriegelungsstangen zu betätigen, welche im Kranz angeordnete Ringsegmente um den Schüttrand des Behälters herum spreizen oder zusammenziehen, so dass der Deckel gegenüber dem Behälter geöffnet oder geschlossen werden kann. Um dies zu erzielen, gibt es ein inneres Deckelelement, das mit Dichtelementen an der Innenseite des Behälters anliegt, und ein äußeres Deckelelement, das mit einem angepassten Rand am Schüttrand des Behälters anliegt. Die Ringsegmente umgreifen die Ränder des Behälters und des äußeren Deckelelements und koppeln diese zusammen bzw. geben diese frei, um den Deckel abheben zu können. Die Schließvorrichtung ist in dem Raum zwischen dem inneren und dem äußeren Deckelelement untergebracht, wobei die Verriegelungsstangen durch Öffnungen des äußeren Deckelelements hindurchgreifen, um mit den Ringsegmenten verbunden zu sein. Zwischen dem inneren Deckelelement und dem äußeren Deckelelement erstrecken sich ferner zwei Ventile, wovon das eine ein Überdruckventil und das andere ein von Hand zu betätigendes Belüftungsventil für das Innere des Kochtopfes darstellen.

Um ein unbeabsichtigtes Öffnen des Topfes zu vermeiden, ist aus dieser Druckschrift eine Sicherheitseinrichtung bekannt, bei welcher durch den Dampfdruck bei Betrieb Teile des Schließmechanismus gegeeinandergepresst werden und so das unbeabsichtigte Öffnen erschweren sollen. Hierbei wäre es wünschenswert, ohne Einschränkungen auf ein einfaches Öffnen und Schließen des Kochtopfs die Sicherheit des Betriebs des Kochtopfs noch weiter zu erhöhen.

Der Erfindung liegt deshalb die Aufgabe zugrunde, einen Überdruck-Kochtopf zu schaffen, der gegenüber dem Stand der Technik eine weiter erhöhte Betriebssicherheit aufweist.

Diese Aufgabe mit einem Überdruck-Kochtopf mit den Merkmalen des Anspruchs 1, sowie einem Deckel für einen solchen Kochtopf gemäß Anspruch 15 gelöst und durch die weiteren Merkmale der abhängigen Ansprüche ausgestaltet und weiterentwickelt.

Demgemäß sieht die Erfindung einen Deckel für einen Überdruck-Kochtopf, sowie einen Überdruck-Kochtopf mit einem Behälter mit einer Behälteröffnung und einen solchen Deckel vor. Der Deckel weist eine Deckelplatte mit einer Auslassöffnung und eine manuell betätigbaren Schließvorrichtung mit einem drehbar an der Deckelplatte befestigten Drehelement auf. Durch Drehung des Drehelements ist der Behälter mit dem aufgesetzten Deckel zur Verriegelung verrastbar. Außerdem weist der Deckel ein Auslassventil auf, welches am Drehelement befestigt ist, so daß das Auslassventil bei Drehung des Drehelements mitgedreht wird. Das Auslassventil weist eine Betätigungseinrichtung auf, mit welcher ein Teil des Ventils zum Öffnen und Schließen des Ventils bewegbar ist. Das Teil des Ventils kann so mittels der Betätigungseinrichtung zum Schließen des Ventils auf die Auslassöffnung abdichtend aufgepresst werden und so gleichzeitig eine Drehbewegung des Drehelements verhindern oder zumindest erschweren. In geöffneter Stellung des Ventils ist das Teil von der Auslassöffnung weg bewegt, so daß Dampf aus dem Topf entweichen kann und eine Drehbewegung des Drehelements zur Entriegelung des Deckels ermöglicht wird. Die erfindungsgemäße Ausgestaltung des Auslassventils versieht dieses mit einer Doppelfunktion, nämlich neben der Funktion als Auslassventil, um nach dem Kochen und vor dem Öffnen den Überdruck im Kochtopf abzulassen gleichzeitig auch noch die Funktion, eine Bewegung des Drehelements und damit eine Betätigung der Schließvorrichtung zu verhindern oder zumindest zu erschweren.

Das Drehelement ist besonders bevorzugt so gelagert, daß die Drehung parallel zur Ebene der Deckelplatte, beziehungsweise des Topfrandes, oder in axialer Richtung bezüglich der Mittenachse des Topfes, welche durch den Topfboden und die Topföffnung läuft, erfolgt. Damit kann ein flach auf der Deckelplatte aufliegendes Drehelement und eine insgesamt flache Konstruktion des Schließmechanismus erreicht werden.

Wirksam verhindert werden kann ein unbeabsichtigtes Öffnen mittels des Auslassventils insbesondere dann, wenn das bewegte Teil des Ventils in Bewegungsrichtung des Ventils entlang der Deckelplatte mit einem mit der Deckelplatte fest verbundenen Element oder Abschnitt verrastet. Ein solches Element ist in bevorzugter Ausgestaltung eine Vertiefung, innerhalb welcher die Auslassöffnung angeordnet ist, wobei in geschlossener Stellung des Ventils das bewegbare Teil in die Vertiefung eingreift.

Um den Deckel mit dem Behälter zu verriegeln, kann der Behälter an der Behälteröffnung einen sich von der Topf- oder Behälterwand ausgehend radial nach aussen erstreckenden Schüttrand und die Schließvorrichtung zumindest ein, vorzugsweise mehrere Ringsegmente umfassen, welche in radialer Richtung des Deckels geschnitten eine U-förmige Querschnittform mit radial einwärts weisenden Schenkeln aufweisen. Mittels des Drehelements der Schließvorrichtung können dann die Ringsegmente so bewegt werden, daß sie in einer Verriegelungsposition den Schüttrand umgreifen,

Der Schüttrand des Überdruck-Kochtopfs kann als gebogener Rand ausgebildet sein. Auf diesen legt sich in Weiterbildung der Erfindung die Deckelplatte des Deckels auf. Die Schließvorrichtung umfasst als aktive Verschließelemente einen Kranz von Ringsegmenten vorzugsweise drei Ringsegmenten. Mittels des U-förmigen Querschnitts der Ringsegmente werden die Ränder des Kochtopfes und des Deckels miteinander verriegelt bzw. entriegelt. Zu diesem Zweck werden zur Verriegelung die Ringsegmente horizontal bzw. radial einwärts bewegt, wozu es eine Betätigungseinrichtung unter Einschluss eines drehbaren Griffes gibt, welcher mit dem Drehelement verbunden ist oder ein solches Drehelement darstellt. In radial einwärts bewegter Stellung umgreifen die U-förmigen Querschnitte der Ringsegmente den sich radial nach aussen erstreckenden Schüttrand. Der Deckel kann in dieser Stellung der Schließeinrichtung nun nicht mehr abgehoben werden.

Die Drehbewegung des Drehelements der Verschlußeinrichtung wird gemäß einer Weiterbildung der Erfindung in eine radiale Bewegung übersetzt, mit welcher sich das oder die Ringsegmente in radialer Richtung verschieben lassen, um diese zwischen der Verriegelungs- und Entriegelungsstellung zu bewegen. Dazu umfasst die Schließvorrichtung Verriegelungsstangen, die vorzugsweise der Form der Oberseite der Deckelplatte angepasst und entlang dieser geführt werden, wobei das Drehelement eine an einem zentralen Lagerbolzen gelagerte Kurbelscheibe sowie eine Reihe von an der Kurbelscheibe angebrachten weiteren Lagerbolzen aufweist, an denen die Verriegelungsstangen angelenkt sind.

Diese Ausführungsform der Erfindung kann in vorteilhafter Weise durch eine zweite Sicherungseinrichtung gegen unbeabsichtigtes Entriegeln des Deckels bei druckbeaufschlagtem Topf weitergebildet werden. Dazu kann der Deckel einen Anschlag für die Verriegelungsstangen umfassen, welcher in druckbeaufschlagtem Zustand des Topfes eine Bewegung der Verriegelungsstangen in radialer Richtung in eine Entriegelungsposition verhindert und in drucklosem Zustand eine Bewegung über den Anschlag hinweg ermöglicht. Eine besonders einfache Ausführungsform dieser Weiterbildung sieht vor, daß die Schließvorrichtung Ringsegmente umfasst, welche in radialer Richtung des Deckels geschnitten eine U-förmige Querschnittform mit radial einwärts weisenden Schenkeln aufweisen, und wobei mittels des Drehelements und der daran angelenkten Verriegelungsstangen die Ringsegmente in radialer Richtung bewegbar sind, so daß sie in einer radial einwärts bewegten Verriegelungsposition den Schüttrand umgreifen, und wobei die Verriegelungsstangen an den Ringsegmenten innenseitig im U-förmigen Querschnitt jeweils an einem der Schenkel angeschweißt sind, so daß die Stangenenden innenseitig innerhalb der U-Form des Ringsegmentes eine Kante bilden, und wobei auf der Ober-, beziehungsweise Außenseite der Deckelplatte, auf welcher die Verriegelungsstangen verlaufen, ein radial auswärts ansteigender Abschnitt vorgesehen ist, welcher radial außerhalb der Position der angeschweißten Stangenenden bei Positionierung in Verriegelungsposition angeordnet ist, und wobei in druckbeaufschlagtem Zustand des Topfes die Deckelplatte angehoben wird, so daß sie in Richtung auf die Schenkel der Ringsegmente, an welchen die Verriegelungsstangen angeschweißt sind, gedrückt wird, soweit die Schenkel der Ringsegmente dies ermöglichen, so daß der radial auswärts ansteigende Abschnitt einen Anschlag für die Stangenenden bildet und eine Bewegung der Stangen und der daran angeschweißten Ringsegmente radial auswärts und damit eine Entriegelung verhindert.

Um den Dichtungsring für die Behälteröffnung zu haltern, kann die Deckelplatte des Deckels weiterhin einen U-förmig umgebogenen oder rückgebogenen Rand zum Einklemmen des Dichtungsringes aufweisen. Dabei ist der Deckel so ausgebildet, daß der umgebogene Rand der Deckelplatte auf dem Schüttrand des Behälters bei aufgesetztem Deckel und drucklosem Kochtopf aufliegt. Der Dichtungsring weisteinen radialen Abschnitt auf, der in dem rückgebogenen Rand der Deckelplatte eingeklemmt ist. Außerdem kann ein geeigneter Dichtungsring einen axialen, leicht nach außen geneigten Abschnitt besitzen, der eine Dichtlippe bildet.

Der Griff kann in axialer Richtung zum Anheben des Deckels benutzt werden, während durch Drehen des Griffes, beziehungsweise des Drehelements bei aufgesetztem Deckel eine Kurbelscheibe betätigt wird, welche Verriegelungsstangen in radialer Richtung zu verschieben ermöglicht, um die Ringsegmente entweder radial heranzuziehen und die Verriegelung zwischen Deckel und Kochtopf zu bewirken, oder die Verriegelungsstangen werden radial nach außen verschoben, um die Ringsegmente außer Übergreifen des Schüttrandes des Kochtopfes zu bringen und damit das Abheben des Deckels vom Topf zu ermöglichen.

Das Auslassventil weist vorzugsweise ein Ventilgehäuse auf, welches am Drehelement befestigt ist. Ein Ventilkörper ist als bewegbares Teil des Ventils zum Öffnen und Schließen des Ventils vorgesehen und kann mittels der Betätigungseinrichtung des Ventils in dem Ventilgehäuse in Richtung auf die Auslassöffnung und von dieser weg bewegt werden. In Weiterbildung der Erfindung ist weiterhin vorgesehen, das Ventilgehäuse und den Ventilkörper gegeneinander mittels eines Membranbalges abzudichten.

Um eine Überdrucksicherung zu schaffen, ist es besonders vorteilhaft, wenn der Ventilkörper unter Federvorspannung an einem an der Deckelplatte angeordneten Ventilsitz abdichtet. Damit werden die beiden Funktionen eines manuell betätigten Ventils zum Ablassen des Überdrucks nach dem Kochen und eines Sicherheitsventils gleichzeitig mit der weiteren Funktion einer Sicherungseinrichtung zur Verhinderung eines Entriegelns des Deckels in druckbeaufschlagtem Zustand vereinigt. Zusätzlich kann im Ventilkörper ein Hohlraum vorgesehen sein, in dem eine Druckanzeigeeinrichtung untergebracht ist. Diese kann insbesondere einen Stift oder Kolben umfassen, auf welchen über eine Membran im Ventil der Dampfdruck des Kochtopfs wirkt. Ist dann hinreichend Druck aufgebaut, wird der Stift oder Kolben aus dem Ventil herausgedrückt und wird sichtbar. In bevorzugter Ausgestaltung der Erfindung ist dazu eine die Auslassöffnung gegen den Hohlraum abdichtende Membran und ein federbelasteter Kolben mit Zeigerstift vorgesehen, dessen Stellung relativ zum Ventilkörper den Behälterdruck anzeigt. Damit wird beispielsweise dem Koch signalisiert, daß der Druck nun aufgebaut ist und der Kochtopf vom Herd genommen oder die Heizleistung der Kochplatte reduziert werden kann. Mit dieser Weiterbildung der Erfindung wird also noch eine weitere Funktion, nämlich eine Anzeige, ob der Kochtopf unter Druck steht, im erfindungsgemäßen Ventil vereinigt.

Um das Auslassventil zu betätigen, ist in vorteilhafter Weiterbildung der Erfindung ein Wippenhebel als Betätigungseinrichtung vorgesehen und am Ventilgehäuse gelagert. Bei dieser Ausführungsform der Erfindung kann dann die Druckanzeigeeinrichtung so ausgestaltet sein, dass der Kopf des Zeigerstiftes bei Druck im Kochtopf aus dem Wippenhebel herausragt.

Gerade für die Zubereitung von Speisen werden auch hohe Anforderungen an die Hygiene und damit an die Reinigbarkeit gestellt. Es ist daher sehr vorteilhaft, wenn auch die Teile des Schließmechanismus gut zugänglich sind. Insbesondere ist es dazu günstig, wenn die Schließvorrichtung in einfacher Weise abgenommen und separat gereinigt werden kann. Insbesondere können an der Auslassöffnung des Deckels Speisereste zurückbleiben. Bei der erfindungsgemäßen Anordnung ergibt sich hier ein besonderer Vorteil auch dadurch, daß das Ventil auf dem Drehelement der Schließvorrichtung angeordnet ist und daher mit entfernt wird, wenn das Drehelement abgenommen wird.

Um eine leichte Reinigung zu ermöglichen, ist dabei in Weiterbildung der Erfindung das Drehelement der Schließvorrichtung mit einer an der Drehachse des Drehelements angeordneten lösbaren Verbindung mit der Deckelplatte verbunden. Durch Lösung dieser Verbindung kann dann das Drehelement einschließlich des Auslassventils, oder sogar die gesamte Schließvorrichtung einschließlich des Ventils abgenommen werden. Insbesondere kann die Verbindung eine manuell ohne Hilfsmittel lösbare Verbindung sein. Hierzu kommen unter anderem eine Schraubverbindung mit einer manuell ohne Schraubendreher lösbaren Rändelschraube, mit einem Splint gesichert aufgesteckte Teile oder mittels eines Hebelmechanismus lösbare Teile in Frage.

Besonders bevorzugt wird aber eine bezüglich der Drehachse azentrisch angeordnete Fixierung der Schließvorrichtung an der Deckelplatte. Hier bietet es sich insbesondere an, wenn die Schließvorrichtung an der Auslassöffnung mit der Deckelplatte fixiert wird. Dazu ist in Weiterbildung der Erfindung vorgesehen, daß die Schließvorrichtung am Ventilsitz mit der Deckelplatte verbunden ist und durch Lösen eines Fixierungselements an der Auslassöffnung, vorzugsweise einer Mutter am Ventilsitz, die gesamte Schließvorrichtung einschließlich des Ventilsitzes von der Deckelplatte abnehmbar ist. Insbesondere ist es günstig, wenn dieses Fixierungselement alleine die Fixierung der Schließvorrichtung an der Deckelplatte bewirkt. Die vorstehend beschriebene Ausgestaltung der Erfindung kann in einfacher Weise insbesondere realisiert werden, indem die Schließvorrichtung ein eigenes Trägerelement aufweist, welches auf der Deckelplatte fixiert ist und auf welchem das Drehelement drehbar befestigt ist, wobei durch Lösen des Verbindungselements das Trägerelement von der Deckelplatte gelöst wird und abnehmbar ist. Vorzugsweise ist am Trägerelement auch der Ventilsitz befestigt. Die vorstehend beschriebenen Ausführungsformen mit azentrischer Befestigung der Schließvorrichtung bieten den Vorteil, daß durch Lösen einer einzigen Verbindung die Deckelplatte von der Schließvorrichtung einschließlich des Ventilsitzes getrennt werden kann und die Öffnung in der Deckelplatte für den Ventilsitz leicht gereinigt werden kann.

Auch bietet es sich ebenfalls aus Gründen der leichteren Reinigbarkeit der Kochtopfteile an, wenn das Auslassventil in einfacher Weise ohne zusätzliches Werkzeug vom Drehelement gelöst werden kann. Vorzugsweise ist dazu das Auslassventil in das Drehelement oder ein mit diesem verbundenen, mitdrehenden Teil eingeschraubt.

Ein Ausführungsbeispiel der Erfindung wird anhand der Zeichnung beschrieben. Dabei zeigt:
Fig. 1 einen Schnitt durch Bereiche des Kochtopfes und des Deckels,
Fig. 2 einen teilweisen Längsschnitt durch ein Auslassventil,
Fig. 3 bis 7 Einzelteile des Ventils, nämlich

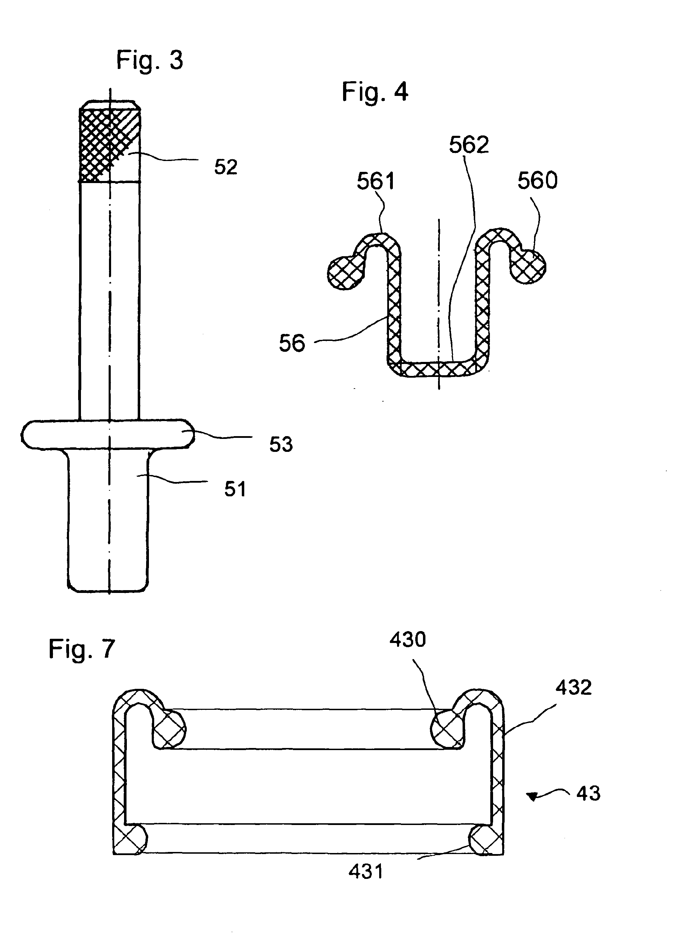

Fig. 3 einen Kolben mit Zeigerstift,
Fig. 4 eine Membran,

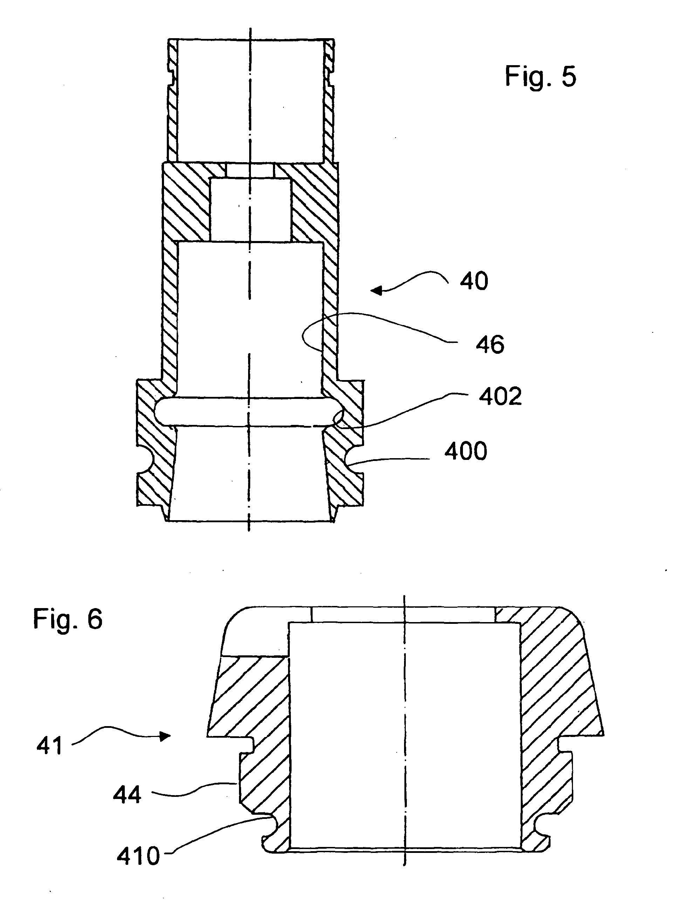

Fig. 5 einen Ventilkörper,
Fig. 6 ein Ventilgehäuse,
Fig. 7 einen Abdichtbalg,

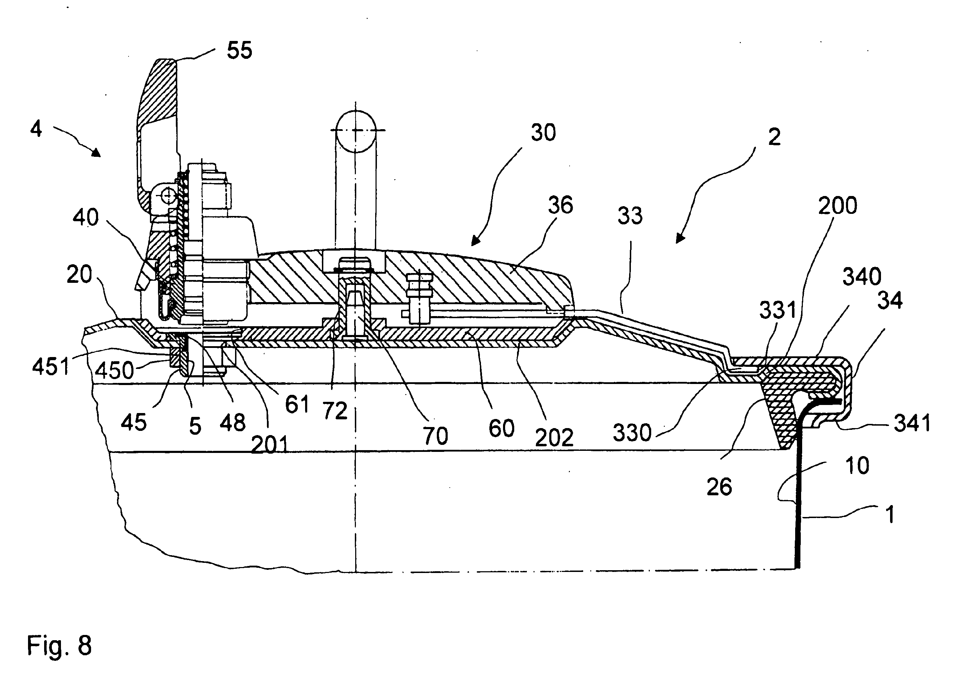

Fig. 8 eine Querschnittansicht des Topfes mit aufgesetztem und verriegeltem Deckel und geöffnetem Auslassventil,

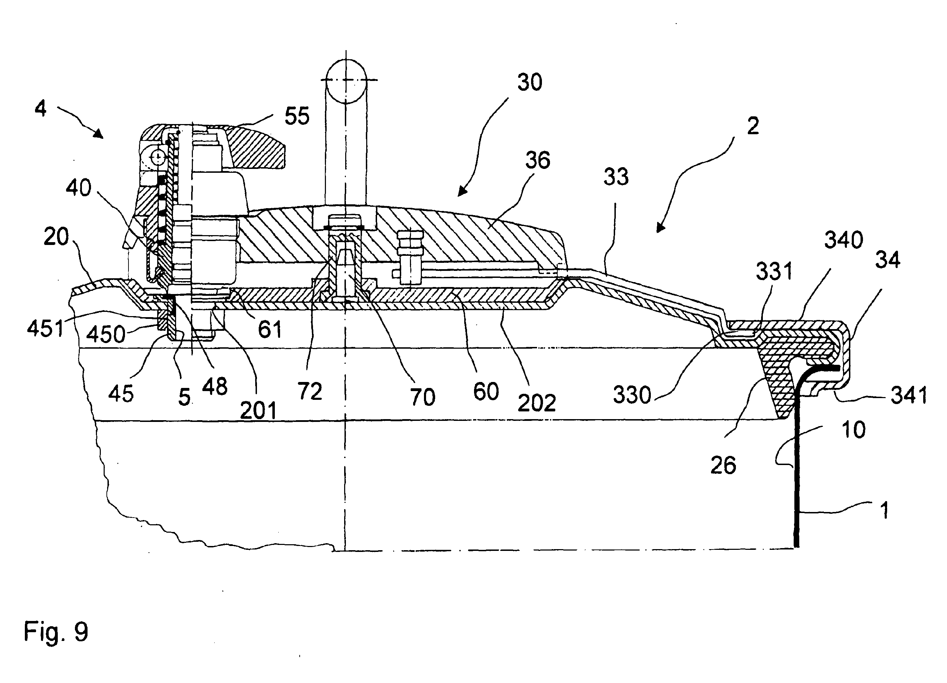

Fig. 9 eine Querschnittansicht des Topfes mit aufgesetztem und verriegeltem Deckel und geschlossenem Auslassventil,

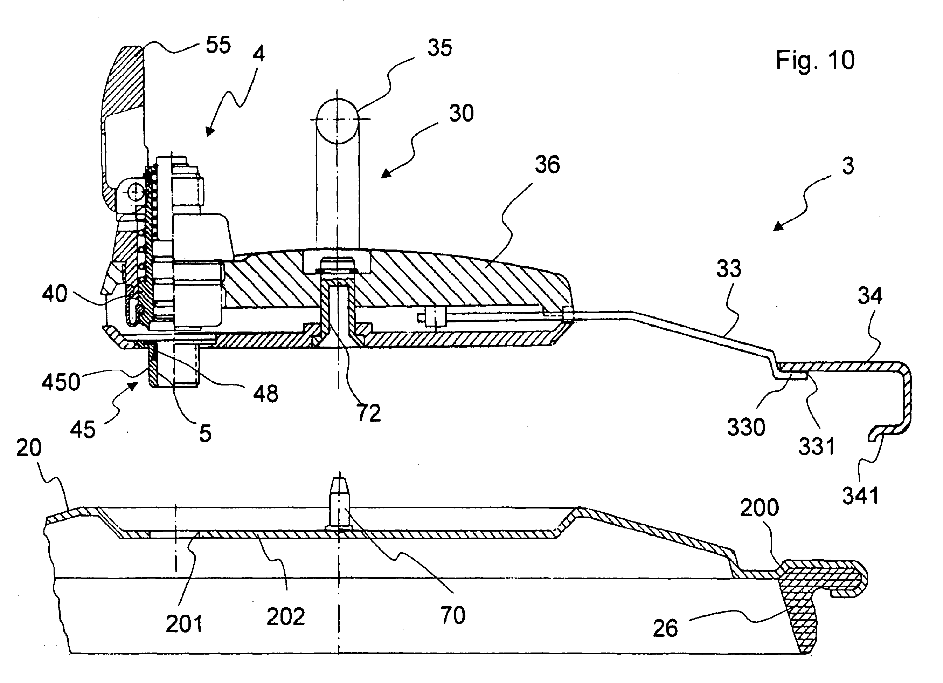

Fig. 10 die von der Deckelplatte abgenommene Schießvorrichtung.

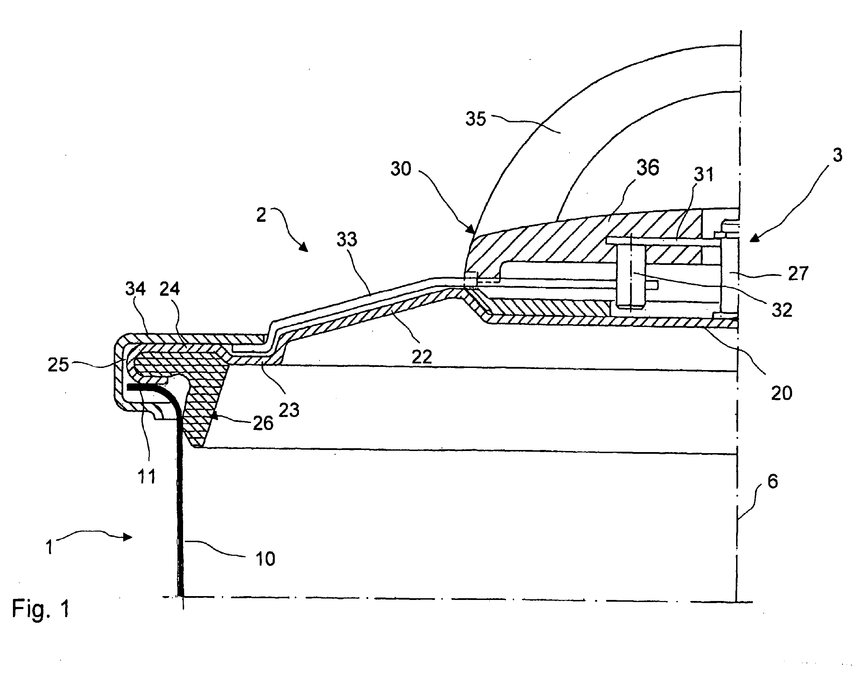

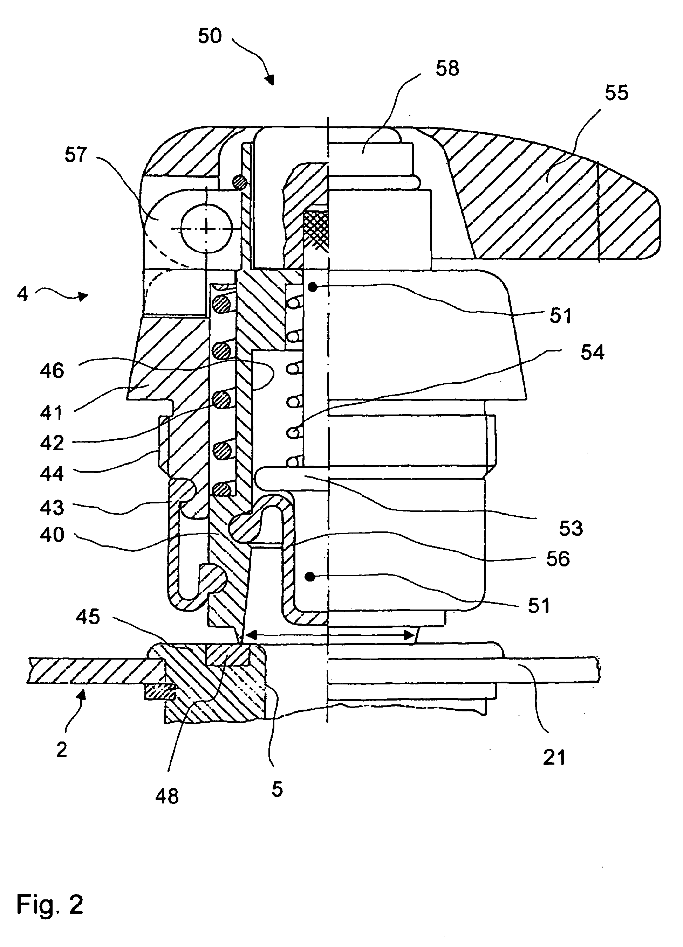

Es wird Bezug auf Fig. 1 genommen. Der Überdruck-Kochtopf umfasst einen Topf oder Behälter 1, einen Deckel 2, eine Schließvorrichtung 3 und ein Ventil 4, das in Vergrößerung in Fig. 2 dargestellt ist. Der Topf oder Behälter 1 weist eine Behälteröffnung 10 und einen von,dieser ausgehenden, sich radial nach außen erstreckenden, gebogenen Rand 11 auf, der auch als Schüttrand bezeichnet wird. Der Deckel 2 weist eine einzige Deckelplatte 20 mit einem Nabenbereich 21, einem geneigten Ringbereich 22, einem Vertiefungsbereich 23, einem radialen Randbereich 24 und einem umgebogenen Rand 25 auf. In dem umgebogenen Rand 25 des Deckels ist eine Dichtung 26 mit ihrem äußeren radialen Schenkel eingeklemmt, wobei der axiale, leicht nach außen geneigte Schenkel eine Dichtlippe darstellt.

Die Schließvorrichtung 3 umfasst einen drehbaren Griff 30 als Drehelement mit einer Kurbelscheibe 31, eine Reihe (vorzugsweise drei) von an der Kurbelscheibe angebrachten Lagerbolzen 32, eine gleiche Anzahl von Verriegelungsstangen 33 und eine gleiche Anzahl von Ringsegmenten 34. Die Verriegelungsstangen 33 umfassen jeweils einen Kopfteil, mit dem sie an ihrem Lagerbolzen 32 angelenkt sind, und einen Fußteil, an dem ein jeweiliges Ringsegment 34 angeschweißt ist. Insgesamt erstrecken sich die Verriegelungsstangen 33 tangential zu der Kurbelscheibe 31. Der drehbare Griff 30 deckt den Nabenbereich 21 des Deckels ab und umfasst einen Handgriff 35 und einen Griffboden 36. Die Kurbelscheibe 31 ist von dem Material des Griffbodens 36 umgossen. Zur drehbaren Lagerung des Griffs 30 dient ein zentraler Lagerbolzen 27, der an der Deckelplatte 20 befestigt ist, z. B. durch Anschweißen. Der Lagerbolzen 27 weist eine Ringnut 28 zum Eingriff eines Sprengrings 29 auf, mit dem die Kurbelscheibe 21 und damit der Griff 30 an dem zentralen Lagerbolzen 27 drehbar befestigt ist. Die Bohrung im Griffboden 36 zur Aufnahme des Kopfes des Lagerbolzens 27 wird durch einen Schutzdeckel (nicht gezeigt) verschlossen.

Fig. 2 zeigt einen Längsschnitt durch das Auslassventil 4, wie es auf einer Auslassöffnung 5 im Deckel 2 sitzt. Das Ventil 4 umfasst einen Ventilkörper 40, der in einem Ventilgehäuse 41 geführt ist und mit einer Ventilfeder 42 gegen eine Dichtung 48 des den Ventilsitzes 45 nahe der Auslassöffnung 5 gepresst wird. Der Bewegungsspalt zwischen Ventilkörper und Ventilgehäuse wird durch eine ringförmige Membran oder einen Balg 43 abgedichtet. Der Balg ist in Fig. 7 genauer dargestellt. Dieser weist zwei verdickte Ränder 430, 431 zum Haltern in entsprechenden Ausnehmungen in Ventilgehäuse 41 und Ventilkörper 40 auf. Um eine leichte Bewegbarkeit der Ränder 430, 431 zu ermöglichen, ist die Wandung 432 des Balgs 43 U-förmig umgebogen.

Ventilkörper 40 und Ventilgehäuse 41 sind genauer in Fig. 5, beziehungsweise Fig. 6 dargestellt. Beide Teile weisen rinförmige Einsenkungen 400, beziehungsweise 410 auf, in welche die verdickten Ränder 430, 431 des Balgs 43 eingesetzt werden, um diesen zu haltern.

Ein Schraubgewinde 44 an dem Ventilgehäuse dient zum Einschrauben des Ventils in eine Bohrung (nicht dargestellt) des Griffbodens 36. Die Unterbringungsstelle des Ventils 4 entspricht in etwa einer radialen Position des Lagerbolzens 32 in Fig. 1, jedoch um 60° gegenüber der Stelle 32 um die Vorrichtungsachse 6 gedreht, d. h. in einer radialen Schnittebene durch die Geräteachse 6, die um 60° gegenüber der dargestellten Schnittebene in Fig. 1 abweicht. Diese Schnittebene ist in Fig. 2 dargestellt.

Der Ventilkörper 40 weist noch einen Hohlraum 46 auf, in welchem eine Druckanzeigeeinrichtung 50 untergebracht ist. Die Druckanzeigeeinrichtung umfasst einen Kolben 51 mit Zeigerstift 52 sowie einen Bund 53 zur Führung in dem Hohlraum 46 sowie zur Anlage einer Druckmessfeder 54, die sich an einem Ringkragen des Ventilkörpers 40 abstützt. Der Hohlraum 46 wird durch eine in Fig. 4 genauer dargestellte Membran 56 gegenüber dem Dampf des Kochtopfes abgedichtet, der über die Auslassöffnung 5 ansteht. Die Membran ist hutförmig ausgebildet und weist eine U-förmig umgebogene Krempe 561 mit einem ringförmigen verdickten Rand 560 zur Halterung der Mambran auf. Die Membran 56 stülpt sich über den Kolben 51, so daß der Bodenabschnitt 562 der Membran auf dem Ende des Kolbens 51 aufliegt. Der verdickte Rand 560 der Membran 56 wird in der innenseitigen Einsenkung 402 des in Fig. 5 gezeigten Ventilkörpers 40 gehaltert.

Der Wippenhebel 55 ist mit dem Ventilgehäuse 41 schwenkbar verbunden. Durch Betätigung des Wippenhebels 55 wird der Ventilkörper 40 gegenüber dem Ventilgehäuse auf- und ab bewegt. In der Darstellung der Fig. 2 ist der Wippenhebel in heruntergedrückter Position dargestellt. In dieser Position ist der Ventilkörper 40 nach unten auf den die Auslassöffnung 5 umgebenden Ventilsitz 45, beziehungsweise dessen Dichtung 48 gedrückt und das Ventil mithin geschlossen. Der Wippenhebel 55 deckt bei drucklosem Topf den Kopf 58 des Zeigers 52 gerade ab.

Der Betrieb des Kochtopfes ist wie folgt:
Um den Deckel 2 auf den Topf 1 aufzusetzen, wird der Griff 30 so gedreht, dass die Verriegelungsstangen 33 radial ausfahren und die Ringsegmente 34 so weit radial nach außen verschieben, dass das innere Ende der Ringsegmente über das äußere Ende des Schüttrandes 11 in axialer Richtung geschoben werden kann und der Rand 25 auf dem Schüttrand 11 aufruht. Anschließend wird der Griff 30 gedreht, und die Verriegelungsstangen 33 werden zurückgezogen, so dass die Ringsegmente 34 die in Fig. 1 dargestellte Stellung einnehmen. Dabei legt sich die Lippe der Dichtung 26 an den Innenumfang des Topfes 1 an. Wenn der Topf mit einem Anteil Wasser als Topfinhalt anschließend beheizt wird, entwickelt der Topfinhalt Wasserdampf, was zur Druckerhöhung im Topfinneren führt. Der sich erhöhende Druck führt dazu, dass die Lippe der Dichtung 26 immer stärker an die Topfwand angepresst wird und dadurch sicher abdichtet, auch wenn der Deckel 2 leicht angehoben wird, bis der jeweilige untere Schenkel der Ringsegmente 34 an der Unterseite des Schüttrandes 11 anliegt. Der sich entwickelnde höhere Druck wirkt auf den Kolben 51 der Druckanzeige 50 gegen den Druck der Messfeder 54 ein, so dass das Maß des Anstiegs des Kopfes 58 des Anzeigestiftes 52 über den Umriss der Wippe 55 ein Maß des Innendrucks des Topfes darstellt.

Im Falle, dass sich ein zu starker Druck im Inneren des Topfes aufbaut, spricht das Ventil 4 an, d. h. die Druckkraft im Querschnitt 47 des Ventils übersteigt die Kraft der Feder 42, der Ventilkörper 40 wird angehoben und Überdruck strömt durch die Lücke zwischen der Unterseite des Ventilkörpers 40 und der Oberseite des Ventilsitzes 45 ab.

Wenn der Dampftopf geöffnet werden soll, wird zunächst Dampf abgelassen, indem der Griff 30 aus seiner Schließstellung (Fig. 1) in die Öffnungsstellung gedreht wird. Dabei rutscht das untere Ende des Ventilkörpers 40 über den Sitz 45 und gibt die Öffnung 5 wenigstens teilweise frei, so dass Dampf ungehindert aus dem Topf und über Lücken zwischen dem Griffboden 36 und dem Nabenbereich 21 des Deckels 2 entweichen kann. Dies führt zum Druckabbau, wodurch die Anpressung der Lippe der Dichtung 26 so weit herabgesetzt wird, dass das Abheben des Deckels 2 vom Topf 1 gefahrlos möglich wird.

Im folgenden werden anhand der Fig. 8 und 9 die erfindungsgemäßen Sicherungseinrichtungen gegen unbeabsichtigtes Öffnen des Kochtopfs in druckbeaufschlagtem Zustand beschrieben. Dazu zeigt Fig. 8 einen Querschnittansicht des auf den Topf 1 aufgesetzten Deckel 2 mit geöffnetem Ventil 2. Fig. 9 zeigt die gleiche Querschnittansicht, jedoch mit geschlossenem Ventil. Das Ventil 4 dient insbesondere erfindungsgemäß auch als Sicherungseinrichtung, um ein versehentliches Entriegeln der Verschlusseinrichtung des Topfdeckels 2 zu verhindern.

In beiden Figuren ist der Deckel in mit dem Topf 1 am Schüttrand 11 mittels der Ringsegmente 34 verriegelter Position dargestellt. Der Sicherungsmechanismus des Ventils basiert darauf, daß der Ventilkörper 40 als bewegliches Teil des Ventils 4 in geschlossenem Zustand des Ventils 4, wie er in Fig. 9 dargestellt ist, gleichzeitig eine Betätigung der Schließvorrichtung, beziehungsweise eine Drehung des Griffs 30 verhindert. Dazu ist das Ventil 4 auf dem Griff 30 mitrotierend angeordnet. Weiterhin ist dazu auf der Deckelplatte 20 eine Vertiefung vorgesehen, in welcher die Auslassöffnung 5 mit Ventilsitz 45 angeordnet ist. Die Dichtung des Ventilsitzes hat hier eine etwas andere Form als bei dem in Fig. 2 gezeigten Beispiel,

Die Vertiefung wird bei dem in den Fig. 8 und 9 gezeigten Beispiel durch eine Öffnung 61 in einem auf die Deckelplatte 20 aufgesetzten und an dieser befestigten Kunststoff-Formteil 60 gebildet, wobei die Auslassöffnung innerhalb der Öffnung 61 angeordnet ist. Das Kunststoff-Formteil ist -anders ls der Griff 30 drehfest mit der Deckelplatte verbunden. In geöffneter Position des Ventils, wie Fig. 8 zeigt, ist der Ventilkörper oberhalb des Kunststoff-Formteils 60, beziehungsweise oberhalb der Öffnung 61 angeordnet. Eine Drehung des Griffs wird in dieser Position nicht verhindert.

Demgegenüber wird, wie in Fig. 9 gezeigt ist, der Ventilkörper 40 bei geschlossenem Ventil 4 auf den Ventilsitz 45 gepresst, der innerhalb der Öffnung 61 und unterhalb von deren oberen Rand angeordnet ist. Damit wird der Ventilkörper in die durch die Öffnung 61 gebildete Vertiefung eingesenkt. In dieser Position wird nicht nur der Topf abgedichtet, so daß beim Kochen Druck aufgebaut werden kann, sondern es wird zusätzlich auch noch eine Drehung des Griffs 30 verhindert, da bei Drehung des Griffs 30 das Ventil 4 entlang der Ebene der Deckelplatte 20 bewegt wird und dann der Ventilkörper seitlich an der Wandung der Öffnung 61 im Kunststoff-Formteil 60 anstößt. Mit anderen Worten ist allgemein ein Ventil vorgesehen, welches auf dem Drehelement der Schließeinrichtung mitdrehend angeordnet ist und in geschlossener Stellung des Auslassventils mit der Deckelplatte oder einem mit diesem drehfest verbundenen Teil verrastet.

Aufgrund dieses Sicherungsmechanismus kann der Deckel erst geöffnet werden, wenn das Auslassventil 4 geöffnet wird. Durch das Öffnen wird aber zwangsläufig der Druck im Kochtopf abgelassen. Damit ist ein gefährliches Öffnen des Deckels bei unter Druck stehendem Topf nicht möglich.

Um die Betriebssicherheit noch weiter zu erhöhen, ist noch ein weiterer Sicherungsmechanismus vorgesehen, welcher ebenfalls anhand der Fig. 8 und 9 nachfolgend erläutert wird. Dieser Mechanismus basiert darauf, daß in druckbeaufschlagtem Zustand der Deckel etwas angehoben wird, so daß die auf der Deckelplatte 20 geführten Verriegelungsstangen 33 an die Deckelplatte 20 angedrückt werden. Auf der Deckelplatte 20 ist dann ein Anschlag vorgesehen, welcher in druckbeaufschlagtem Zustand des Topfes eine Bewegung der Verriegelungsstangen 33 in radialer Richtung in die Entriegelungsposition verhindert und in drucklosem Zustand eine Bewegung über den Anschlag hinweg ermöglicht.

Im speziellen sind, wie anhand der Fig. 8 und 9 zu erkennen ist, die Verriegelungsstangen 33 an den Ringsegmenten 34 innenseitig im U-förmigen Querschnitt an den oberen Schenkeln 340 der Ringsegmente 34 angeschweißt, so daß die Stangenenden 330 innenseitig innerhalb der Ringsegmente jeweils eine Kante 331 bilden. Auf der Oberseite der Deckelplatte 20, auf welcher die Verriegelungsstangen 33 verlaufen, ist ein radial auswärts ansteigender Abschnitt 200 ausgeformt, welcher radial außerhalb der Position der angeschweißten Stangenenden 330 bei Positionierung in Verriegelungsposition, also in der in den Fig. 8 und 9 dargestellten Position angeordnet ist.

In druckbeaufschlagtem Zustand des Topfes wird die Deckelplatte 20 etwas durch den Dampfdruck angehoben, während sich der Dichtungsring 26 in den Zwischenraum zwischen Deckelplatte 20 und Schüttrand drückt. Das Anheben des Deckels erfolgt durch den Dampfdruck so lange, bis die Schenkel 340, 341 der Ringsegmente 34 die Deckelplatte 20 und den Schüttrand 11 zusammenklammern. Durch das Anheben der Deckelplatte 20 werden die Verriegelungsstangen 33, auf die Deckelplatte 20, beziehungsweise die Deckelplatte 20 in Richtung auf die Schenkel 340 der Ringsegmente 34, an welchen die Verriegelungsstangen 33 angeschweißt sind, gedrückt, so daß der radial auswärts ansteigende Abschnitt 200 nun einen Anschlag für die Stangenenden 330 bildet und eine Bewegung der Stangen 33 und der daran angeschweißten Ringsegmente radial auswärts verhindert. Auch auf diese Weise wird einer unbeabsichtigten oder unzulässigen Entriegelung bei erhöhtem Druck im Kochtopf entgegengewirkt.

Ist der Behälter andererseits drucklos, werden die Enden 330 der Verriegelungsstangen 33 nicht mehr gegen die Deckelplatte 20 gedrückt, so daß die Kanten 331 an den Enden 330 der Verriegelungsstangen 33 leicht über den radial auswärts ansteigenden Abschnitt 200 hinweggleiten können. In drucklosem Zustand kann der Griff daher dann leicht gedreht und der Deckel entriegelt werden. Dieser oben beschriebene Sicherungsmechanismus ähnelt von seiner Funktionsweise dem, welcher in der DE 202 01 624 U1 beschrieben ist. Allerdings sind die wie oben beschriebenen Teile wesentlich einfacher zu fertigen. Statt einer komplizierten Formung der Deckelplatte und eines weiteren Deckels wird einfach eine Anschlagkante durch das Anschweißen der Verriegelungsstangen gebildet.

Die Schließvorrichtung 3 ist außerdem so drehbar auf der Deckelplatte 20 befestigt, daß diese leicht manuell ohne Zuhilfenahme von Werkzeug von der Deckelplatte 20 abgenommen werden kann. Auf diese Weise können die Auslassöffnung 5, sowie in befestigtem Zustand nicht leicht zugängliche, etwa beispielsweise zur Deckelplatte 20 weisende Flächen leicht gereinigt werden.

Im Speziellen ist dazu eine bezüglich der Drehachse des Griffs azentrische Fixierung der Schließvorrichtung an der Auslassöffnung 5, beziehungsweise dem Ventilsitz 45 vorgesehen. Das Kunsststoff-Formteil 60 ist hierzu Bestandteil der Schließvorrichtung 3 und dient als Trägerelement für das Drehelement in Gestalt des Griffs 30 mit Kurbelscheibe, sowie für den Ventilsitz 45. Der Ventilsitz 45 ist mit dem Kunststoff-Formteil 60 fest verbunden. Vorzugsweise wird dazu ein metallischer Ventilsitz verwendet, welcher in das Kunststoff-Formteil 60 eingepresst ist. Der Ventilsitz ist bei an der Deckelplatte fixierter Schließvorrichtung in eine Öffnung 201 der Deckelplatte 20 eingesetzt und ragt auf der Innenseite der Deckelplatte mit einem Gewindeabschnitt 451 heraus. Als Fixierungselement zur Verbindung des Kunststoff-Formteils 60 -und damit der gesamten Schließvorrichtung- mit der Deckelplatte ist eine Mutter 450 vorgesehen, welche auf den innenseitig aus der Deckelplatte 20 herausragenden Gewindeabschnitt 451 des Ventilsitzes 45 aufgeschraubt wird, so daß das Kunststoff-Formteil 60, welches mit dem Ventilsitz 45 fest verbunden ist, nicht von der Deckelplatte 20 abgezogen werden kann.

Der Griff 30 ist drehbar auf einer mit dem Kunststoff-Formteil 60 verbundenen Achse 72 gelagert. Die Achse 71 kann ihrerseits mittels eines Zapfens auf der Deckelplatte 20 zentriert werden. Dieser Zapfen, der beispielsweise mit der Deckelplatte verschweißt ist, ist optional, wenn, wie im Beispiel der Fig. 8 und 9 eine Zentrierung des Kunststoff-Formteils 60 durch die Formgebung der Deckelplatte erreicht wird. Dazu ist die Deckelplatte 20 so geformt, daß sie auf der Ober-, beziehungsweise Außenseite eine Vertiefung 202 aufweist, deren Form an die Form des Kunststoff-Formteils 60 angepasst ist.

Zwar wirken auch der Zapfen 70 und die Vertiefung 202 als Fixierungselemente, jedoch nur zur Fixierung in lateraler Richtung. Es ist offensichtlich, daß lediglich durch Lösen und Entfernen der Mutter 450 am Ventilsitz 45 die gesamte Schließvorrichtung einschließlich Kunststoff-Formteil 60 mit Ventilsitz 45, Griff 30, Verriegelungsstangen 33 und Ringsegmenten 34 als einteilige, zusammenhängende Einheit von der Deckelplatte 20 abgenommen werden kann. Fig. 10 zeigt dazu die Deckelplatte 20 und die Schließvorrichtung 3 in auseinandermontiertem Zustand. Damit die Ringsegmente 34 nach dem Lösen und Entfernen der Mutter 450 am Ventilsitz 45 über den Rand der Deckelplatte geschoben werden können, wird der Griff 30 der Schließvorrichtung 3 in Entriegelungsposition gestellt, so daß die Schenkel 341 radial auswärts bewegt werden, bis deren Enden über den Rand der Deckelplatte 20 mit der eingeklemmten Dichtung 26 hinausragen. Um eine Verstellung des Griffes 30 in die Entriegelungsposition zu ermöglichen, wird außerdem das Ventil 4 in geöffnete Position gestellt, also der Ventilkörper 40 durch Betätigung des Wippenhebels 55 vom Ventilsitz 45 weg bewegt, da ansonsten der Sicherheitsmechanismus mit dem in die Vertiefung im Kunststoff-Formteil 60 eingreifenden Ventilkörper 40 eine Entriegelung, beziehungsweise eine Drehung des Griffs 30 verhindert. Das Ventil 4 und der Wippenhebel 55 sind daher in Fig. 10 auch in geöffneter Position, entsprechend der in Fig. 8 gezeigten Stellung dargestellt.

Es ist dem Fachmann ersichtlich, daß die Erfindung nicht auf die oben beschriebenen Ausführungsbeispiele beschränkt ist, sondern vielmehr in vielfältiger Weise variiert werden kann.

## Patentansprüche

1. Überdruck-Kochtopf, umfassend
einen Behälter (1) mit einer Behälteröffnung (10) und einen Deckel (2), welcher eine Deckelplatte (20) mit einer Auslassöffnung und eine manuell betätigbaren Schließvorrichtung (3) mit einem drehbar an der Deckelplatte (20) befestigten Drehelement umfasst, wobei durch Drehung des Drehelements der Behälter (1) mit dem aufgesetzten Deckel (2) zur Verriegelung verrastbar ist, **dadurch gekennzeichnet, daß** der Deckel ein Auslassventil (4) aufweist, welches am Drehelement befestigt ist, so daß das Auslassventil (4) bei Drehung des Drehelements mitgedreht wird, und wobei das Auslassventil eine Betätigungseinrichtung aufweist, mit welcher ein Teil des Ventils (4) zum Öffnen und Schließen des Ventils bewegbar ist, und wobei das Teil des Ventils (4) mittels der Betätigungseinrichtung zum Schließen des Ventils auf die Auslassöffnung abdichtend aufpressbar ist und so gleichzeitig eine Drehbewegung des Drehelements verhindert oder zumindest erschwert und zum Öffnen von dieser weg bewegbar ist, so daß Dampf aus dem Topf entweichen kann und eine Drehbewegung des Drehelements zur Entriegelung des Deckels ermöglicht wird.

2. Überdruck-Kochtopf gemäß einem der vorstehenden Ansprüche, **dadurch gekennzeichnet, daß** die Auslassöffnung innerhalb einer Vertiefung angeordnet ist, und wobei das bewegbare Teil des Ventils (4) zum Schließen des Ventils in die Vertiefung einsenkbar ist.

3. Überdruck-Kochtopf gemäß einem der vorstehenden Ansprüche, wobei der Behälter (1) an der Behälteröffnung (10) einen gebogenen Schüttrand (11) umfasst, wobei die Schließvorrichtung (3) zumindest ein, vorzugsweise mehrere Ringsegmente (34) umfasst, welche in radialer Richtung des Deckels geschnitten eine U-förmige Querschnittform mit radial einwärts weisenden Schenkeln aufweisen, und wobei und mittels des Drehelements der Schließvorrichtung die Ringsegmente (34) so bewegbar sind, daß sie in einer Verriegelungsposition den Schüttrand (11) umgreifen,

4. Überdruck-Kochtopf gemäß vorstehendem Anspruch, wobei das oder die Ringsegmente (34) durch Drehung des Drehelements in radialer Richtung des Deckels (2) verschiebbar sind, und wobei die Ringsegmente (34) so radial einwärts bewegbar sind, daß sie in radial einwärts bewegter Position den Schüttrand umgreifen und damit den Deckel (2) am Behälter (1) verriegeln.

5. Überdruck-Kochtopf gemäß einem der vorstehenden Ansprüche, **dadurch gekennzeichnet daß** die Schließvorrichtung Verriegelungsstangen (33) umfasst, die vorzugsweise der Form der Oberseite der Deckelplatte (20) angepasst und entlang dieser geführt werden, wobei das Drehelement eine an einem zentralen Lagerbolzen (27) gelagerte Kurbelscheibe (31) sowie eine Reihe von an der Kurbelscheibe (31) angebrachten weiteren Lagerbolzen (32) aufweist, an denen die Verriegelungsstangen (33) angelenkt sind.

6. Überdruck-Kochtopf gemäß einem der beiden vorstehenden Ansprüche, **dadurch gekennzeichnet, daß** die Schließvorrichtung (3) Ringsegmente (34) umfasst, welche in radialer Richtung des Deckels geschnitten eine U-förmige Querschnittform mit radial einwärts weisenden Schenkeln aufweisen, und wobei mittels des Drehelements und der daran angelenkten Verriegelungsstangen die Ringsegmente (34) in radialer Richtung bewegbar sind, so daß sie in einer radial einwärts bewegten Verriegelungsposition den Schüttrand (11) umgreifen, und wobei die Verriegelungsstangen an den Ringsegmenten innenseitig im U-förmigen Querschnitt an einem der Schenkel angeschweißt sind, so daß die Stangenenden innenseitig innerhalb des Ringsegmentes eine Kante bilden, und wobei auf der Oberseite der Deckelplatte, auf welcher die Verriegelungsstangen verlaufen, ein radial auswärts ansteigender Abschnitt vorgesehen ist, welcher radial außerhalb der Position der angeschweißten Stangenenden bei Positionierung in Verriegelungsposition angeordnet ist, und wobei in druckbeaufschlagtem Zustand des Topfes die Deckelplatte angehoben wird, so daß sie in Richtung auf die Schenkel der Ringsegmente, an welchen die Verriegelungsstangen angeschweißt sind, gedrückt wird, soweit die Schenkel der Ringsegmente dies ermöglichen, so daß der radial auswärts ansteigende Abschnitt einen Anschlag für die Stangenenden bildet und eine Bewegung der Stangen und der daran angeschweißten Ringsegmente radial auswärts und damit eine Entriegelung verhindert.

7. Überdruck-Kochtopf gemäß einem der vorstehenden Ansprüche, **dadurch gekennzeichnet daß** die Deckelplatte einen U-förmig rückgebogenen Rand zum Einklemmen eines Dichtungsringes (26) zur Abdichtung der Behälteröffnung aufweist.

8. Überdruck-Kochtopf nach einem der beiden vorstehenden Ansprüche, **dadurch gekennzeichnet, dass** der Dichtungsring (26) einen radialen Abschnitt aufweist, der in dem rückgebogenen Rand (25) des Deckels (2) eingeklemmt ist, und einen axialen, leicht nach außen geneigten Abschnitt besitzt, der eine Dichtlippe bildet.

9. Überdruck-Kochtopf gemäß einem der vorstehenden Ansprüche, mit folgenden Merkmalen des Auslassventils:
ein Ventilgehäuse (41) zur Befestigung am Drehelement;
ein Ventilkörper (40) als bewegbares Teil des Ventils zum Öffnen und Schließen des Ventils, der in dem Ventilgehäuse (41) in Richtung auf die Auslassöffnung (5) und von dieser weg bewegbar ist und unter Federvorspannung (42) an einem an der Deckelplatte angeordneten Ventilsitz (45) abdichtet.

10. Überdruck-Kochtopf nach vorstehendem Anspruch, **dadurch gekennzeichnet, dass** die Druckanzeigeeinrichtung (50) eine die Auslassöffnung (5) gegen den Hohlraum (46) abdichtende Membran (56) und einen federbelasteten Kolben (51) mit Zeigerstift (52) aufweist, dessen Stellung relativ zum Ventilkörper (40) den Behälterdruck anzeigt.

11. Überdruck-Kochtopf nach vorstehendem Anspruch, **dadurch gekennzeichnet, dass** ein Wippenhebel (55) als Betätigungseinrichtung vorgesehen und am Ventilgehäuse (41) gelagert ist und dass der Kopf (58) des Zeigerstiftes (52) bei Druck im Kochtopf (1) aus dem Wippenhebel (55) herausragt.

12. Überdruck-Kochtopf gemäß einem der vorstehenden Ansprüche, **dadurch gekennzeichnet, daß** die Schließvorrichtung am Ventilsitz mit der Deckelplatte verbunden ist und durch Lösen eines Fixierungselements an der Auslassöffnung, vorzugsweise einer Mutter am Ventilsitz, die gesamte Schließvorrichtung (3) einschließlich des Ventilsitzes von der Deckelplatte abnehmbar ist.

13. Überdruck-Kochtopf gemäß dem vorstehenden Anspruch, **dadurch gekennzeichnet, daß** die Schließvorrichtung ein Trägerelement aufweist, auf welchem das Drehelement drehbar befestigt ist, und wobei durch Lösen des Verbindungselements das Trägerelement von der Deckelplatte 20 gelöst wird und abnehmbar ist.

14. Überdruck-Kochtopf gemäß einem der Ansprüche 1 bis 13, **dadurch gekennzeichnet, daß** das Drehelement der Schließvorrichtung mit einer an der Drehachse des Drehelements angeordneten lösbaren Verbindung mit der Deckelplatte verbunden ist und durch Lösung dieser Verbindung das Drehelement einschließlich des Auslassventils, vorzugsweise die gesamte Schließvorrichtung einschließlich des Auslassventils abnehmbar ist.

15. Deckel für einen Überdruck-Kochtopf, insbesondere mit den Merkmalen des Deckels des Überdruck-Kochtopfes gemäß wenigstens einem der vorstehenden Ansprüche, wobei der Deckel (2) eine Deckelplatte (20) mit einer Auslassöffnung und eine manuell betätigbaren Schließvorrichtung (3) mit einem drehbar an der Deckelplatte (20) befestigten Drehelement umfasst, wobei durch Drehung des Drehelements ein Behälter (1) mit dem aufgesetzten Deckel (2) zur Verriegelung verrastbar ist, und wobei der Deckel ein Auslassventil (4) aufweist, welches am Drehelement befestigt ist, so daß das Auslassventil (4) bei Drehung des Drehelements mitgedreht wird, und wobei das Auslassventil eine Betätigungseinrichtung aufweist, mit welcher ein Teil des Ventils zum Öffnen und Schließen des Ventils bewegbar ist, und wobei das Teil des Ventils mittels der Betätigungseinrichtung zum Schließen des Ventils auf die Auslassöffnung abdichtend aufpressbar ist und so gleichzeitig eine Drehbewegung des Drehelements verhindert oder zumindest erschwert und zum Öffnen von dieser weg bewegbar ist, so daß Dampf aus dem Topf entweichen kann und eine Drehbewegung des Drehelements zur Entriegelung des Deckels ermöglicht wird.

## Claims

1. A pressure cooking pot, comprising
a container (1) having a container opening (10), and a lid (2) including a lid plate (20) having an outlet opening and a manually operable locking means (3) with a rotational member rotatably attached to the lid plate (20), wherein the container (1) can be latched, with the lid (2) applied, by rotating the rotational member, **characterized in that** the lid has an outlet valve (4) which is attached to the rotational member such that the outlet valve (4) is entrained to rotate when rotating the rotational member, and wherein the outlet valve has an actuation means, which is operable to move a part of the valve (4) to open or close the valve, and wherein, for closing the valve, said part of the valve (4) can, by means of said actuation means, be pressed onto the outlet opening to seal the same while preventing or at least impeding a rotational movement of the rotational member, and, for opening, can be moved away from said outlet opening, such as to allow vapor to escape from the pot and to allow rotational movement of the rotational member for unlatching the lid.

2. The pressure cooking pot according to any of the preceding claims, **characterized in that** said outlet opening is arranged within a recess, and that said movable part of the valve (4) can be plunged into the recess for closing the valve.

3. The pressure cooking pot according to any of the preceding claims, wherein said container (1) has a curved pouring edge (11) at the container opening (10), said locking means (3) comprising at least one, preferably a plurality of ring segments (34) exhibiting, in a radial section of the lid, a U-shaped cross section with radially inwardly extending legs, and wherein said ring segments (34) are movable by said rotational member of the locking means for encompassing said pouring edge (11) in a latching position.

4. The pressure cooking pot according to the preceding claim, wherein the one or more ring segment(s) (34) are movable radially of the lid (2) by rotation of the rotational member, and wherein said ring segments (34) are movable radially inwards for encompassing said pouring edge in a radially inward position to latch the lid (2) to the container (1).

5. The pressure cooking pot according to any of the preceding claims, **characterized in that** the locking means comprise locking bars (33) which preferably are adapted to and extend along the shape of the upper surface of the lid plate (20), wherein said rotational member comprises a crank plate (31) mounted at a central mounting pin (27), and a number of additional mounting pins (32) attached to said crank plate (31), to which said locking bars (33) are hinged.

6. The pressure cooking pot according to any of the two preceding claims, **characterized in that** said locking means (3) comprise ring segments (34), exhibiting, in a radial section of the lid, a U-shaped cross section with radially inward extending legs, and wherein said ring segments (34) are movable by said rotational member and said locking bars hinged thereon for encompassing said pouring edge (11) in a radially inward latching position, and wherein said locking bars are welded to an inner surface of the U-shaped section of the ring segments to one of said legs such that the ends of the bars form an inside edge within the ring segment, and wherein the upper surface of the lid plate along which the locking bars extend is provided with a radially outward rising portion, which is, when in the latching position, arranged radially outward of the position of the welded ends of the bars, and wherein, in a pressurized condition of the pot, said lid plate is lifted and is pushed towards the legs of the ring segments to which the locking bars are welded, to the extend allowed by the legs of the ring segments, such that said radially outward rising portion forms a stop for the ends of the bars and prevents the bars and the ring segments welded thereto from moving radially outwards, and hence from unlatching.

7. The pressure cooking pot according to any of the preceding claims, **characterized in that** said lid plate has a U-shaped edge turned back to itself, for clamping a sealing ring (26) for sealing the container opening.

8. The pressure cooking pot according to any of the two preceding claims, **characterized in that** said sealing ring (26) has a radial portion which is clamped in the turned-back edge (25) of the lid (2), and an axial portion slightly tilted outwards forming a sealing lip.

9. The pressure cooking pot according to any of the preceding claims, the outlet valve comprising:
a valve housing (41) for attachment to the rotational member;
a valve body (40) as a movable part of the valve for opening and closing the valve, which is movable within said valve housing (41) to and away from the outlet opening (5), and which under biasing of a spring (42) seals against a valve seat (45) arranged at the lid plate.

10. The pressure cooking pot according to the preceding claim,
**characterized in that** said pressure indicating means (50) has a diaphragm (56) sealing the outlet opening (5) against the cavity (46), and a spring biased piston (51) including an indicator pin (52), the position of which relative to the valve body (40) indicates the container pressure.

11. The pressure cooking pot according to the preceding claim, **characterized in that** a rocker lever (55) is provided as an actuation means, mounted at the valve housing (41), and that the head (58) of the indicator pin (52) protrudes from said rocker lever (55) when the pot (1) is under pressure.

12. The pressure cooking pot according to any of the preceding claims, **characterized in that** said locking means at the valve seat is coupled to the lid plate, and that the locking means (3) in a whole, including the valve seat, can be removed from the lid plate by releasing a locking member at the outlet opening, preferably a nut at the valve seat.

13. The pressure cooking pot according to the preceding claim, **characterized in that** the locking means comprise a support member at which the rotational member is rotatably attached, and wherein, by releasing the locking member, the support member is released from the lid plate (20) and can be removed.

14. The pressure cooking pot according to any of claims 1 to 13, **characterized in that** the rotational member of the locking means is coupled to the lid plate through a releasable connection arranged at the rotational axis of the rotational member, and that, by releasing said connection, the rotational member including the outlet valve, preferably the locking means as a whole, is removable.

15. A lid for a pressure cooking pot, in particular with the characteristics of the lid of the pressure cooking pot according to at least one of the preceding claims, wherein said lid includes a lid plate (20) having an outlet opening and a manually operable locking means (3) with a rotational member rotatably attached to the lid plate (20), wherein, by rotating the rotational member, a container (1) with the lid (2) applied can be latched, and wherein the lid has an outlet valve (4) which is attached to the rotational member such that the outlet valve (4) is entrained to rotate when rotating the rotational member, and wherein said outlet valve has an actuation means, which is operable to move a part of the valve to open or close the valve, and wherein, for closing the valve, said part of the valve can, by means of said actuation means, be pressed onto the outlet opening to seal the same while preventing or at least impeding a rotational movement of the rotational member, and, for opening, can be moved away from said outlet opening, such as to allow vapor to escape from the pot and to allow rotational movement of the rotational member for unlatching the lid.

## Revendications

1. Faitout à surpression comprenant
un récipient (1) avec une ouverture de récipient (10) et un couvercle (2), qui comporte une plaque de couvercle (20) avec une ouverture de sortie et un dispositif de fermeture (3) pouvant être actionné manuellement avec un élément rotatif fixé de façon rotative sur la plaque de couvercle (20), le récipient (1) pouvant être encliqueté avec le couvercle (2) posé dessus pour le verrouillage par rotation de l'élément rotatif, **caractérisé en ce que** le couvercle présente une soupape de sortie (4), qui est fixée sur l'élément rotatif, de sorte que la soupape de sortie (4) est entraînée en rotation en cas de rotation de l'élément rotatif, et la soupape de sortie présentant un dispositif d'actionnement avec lequel une partie de la soupape (4) peut être déplacée pour l'ouverture et la fermeture de la soupape, et la partie de la soupape (4) pouvant être comprimée de façon étanche sur l'ouverture de sortie au moyen du dispositif d'actionnement pour la fermeture de la soupape et empêchant ainsi simultanément un mouvement de rotation de l'élément rotatif ou tout du moins le rendant difficile et pouvant être déplacée pour l'ouverture à partir de cette ouverture de sortie, de sorte que de la vapeur peut s'échapper du faitout et un mouvement de rotation de l'élément rotatif pour le déverrouillage du couvercle est rendu possible.

2. Faitout à surpression selon l'une quelconque des revendications précédentes, **caractérisé en ce que** l'ouverture de sortie est disposée à l'intérieur d'une cavité, et la partie mobile de la soupape (4) pouvant s'enfoncer dans la cavité pour la fermeture de la soupape.

3. Faitout à surpression selon l'une quelconque des revendications précédentes, le récipient (1) comprenant un bord de versement (11) plié sur l'ouverture de récipient (10), le dispositif de fermeture (3) comprenant au moins un ou de préférence plusieurs segments annulaires (34), lesquels présentent, coupés dans le sens radial du couvercle, une forme de section en U avec des branches dirigées radialement vers l'entrée, et les segments annulaires (34) pouvant être déplacés au moyen de l'élément rotatif du dispositif de fermeture de telle sorte qu'ils entourent le bord de versement (11) dans une position de verrouillage.

4. Faitout à surpression selon la revendication précédente, le ou les segments annulaires (34) étant coulissant(s) par rotation de l'élément rotatif dans la direction radiale du couvercle (2), et les segments annulaires (34) pouvant être déplacés radialement vers l'entrée de telle sorte que, dans la position déplacée radialement vers l'entrée, ils entourent le bord de versement et verrouillent ainsi le couvercle (2) sur le récipient (1).

5. Faitout à surpression selon l'une quelconque des revendications précédentes, **caractérisé en ce que** le dispositif de fermeture comporte des tiges de verrouillage (33), qui sont adaptées de préférence à la forme du dessus de la plaque de couvercle (20) et sont guidées le long de celle-ci, l'élément rotatif présentant un plateau manivelle (31) fixé sur un boulon de palier (27) central et une série d'autres boulons de palier (32) placés sur le plateau manivelle (31), boulons sur lesquels les tiges de verrouillage (33) sont articulées.

6. Faitout à surpression selon l'une quelconque des revendications précédentes, **caractérisé en ce que** le dispositif de fermeture (3) comporte des segments annulaires (34), qui présentent, coupés dans le sens radial du couvercle, une forme de section en U avec des branches dirigées radialement vers l'entrée, et les segments annulaires (34) pouvant être déplacés dans le sens radial au moyen de l'élément rotatif et des tiges de verrouillage articulées sur cet élément, de sorte qu'ils entourent le bord de versement (11) dans une position de verrouillage déplacée radialement vers l'entrée, et les tiges de verrouillage étant soudées sur les segments annulaires côté intérieur dans la section en U sur l'une des branches, de sorte que les extrémités de tige forment une arête côté intérieur à l'intérieur du segment annulaire, et une partie montant radialement vers l'extérieur étant prévue sur le côté supérieur de la plaque de couvercle, sur lequel les tiges de verrouillage sont agencées, laquelle partie est disposée radialement à l'extérieur de la position des extrémités de tiges soudées dessus en positionnement dans la position de verrouillage, et la plaque de couvercle étant soulevée lorsque le faitout est sollicité par pression, de sorte que la plaque est appuyée en direction des branches des segments annulaires sur lesquelles les tiges de verrouillage sont soudées, dans la mesure où les branches des segments annulaires le permettent, de sorte que la partie montant radialement vers l'extérieur forme une butée pour les extrémités de tiges et empêche un déplacement des tiges et des segments annulaires soudés dessus radialement vers l'extérieur et donc un déverrouillage.

7. Faitout à surpression selon l'une quelconque des revendications précédentes, **caractérisé en ce que** la plaque de couvercle présente un bord replié en arrière en U pour le blocage d'une bague d'étanchéité (26) pour l'étanchéité de l'ouverture de récipient.

8. Faitout à surpression selon l'une quelconque des deux revendications précédentes, **caractérisé en que** la bague d'étanchéité (26) présente une partie radiale qui est coincée dans le bord (25) fléchi en arrière du couvercle (2), et comporte une partie axiale, légèrement inclinée vers l'extérieur, qui forme une lèvre d'étanchéité.

9. Faitout à surpression selon l'une quelconque des revendications précédentes, présentant les caractéristiques suivantes de la soupape de sortie :
un boîtier de soupape (41) pour la fixation sur l'élément rotatif ;
un corps de soupape (40) comme partie mobile de la soupape pour l'ouverture et la fermeture de la soupape, qui peut être déplacé dans le boîtier de soupape (41) en direction de l'ouverture de sortie (5) et à partir de celle-ci et assurant l'étanchéité sous pré-tension de ressort (42) sur un siège de soupape (45) disposé sur la plaque de couvercle.

10. Faitout à surpression selon la revendication précédente, **caractérisé en ce que** le dispositif d'indication de pression (50) présente une membrane (56) assurant l'étanchéité de l'ouverture de sortie (5) contre la cavité (46) et un piston (51) chargé par ressort avec pointe-aiguille (52), dont la position par rapport au corps de soupape (40) indique la pression du récipient.

11. Faitout à surpression selon la revendication précédente, **caractérisé en ce qu'**un levier à bascule (55) est prévu comme dispositif d'actionnement et est monté sur le boîtier de soupape (41) et **en ce que** le sommet (58) de la pointe-aiguille (52) dépasse du levier à bascule (55) en cas de pression dans le faitout (1).

12. Faitout à surpression selon l'une quelconque des revendications précédentes, **caractérisé en ce que** le dispositif de fermeture sur le siège de soupape est relié à la plaque de couvercle et l'ensemble du dispositif de fermeture (3), y compris le siège de soupape, peut être enlevé de la plaque de couvercle par détachement d'un élément de fixation sur l'ouverture de sortie, de préférence un écrou sur le siège de soupape.

13. Faitout à surpression selon la revendication précédente, **caractérisé en ce que** le dispositif de fermeture présente un élément support, sur lequel l'élément rotatif est fixé de façon rotative, et l'élément support pouvant être enlevé de la plaque de couvercle 20 par détachement de l'élément de liaison.

14. Faitout à surpression selon l'une quelconque des revendications 1 à 13, **caractérisé en ce que** l'élément rotatif du dispositif de fermeture est relié à la plaque de couvercle par une liaison amovible disposée sur l'axe de rotation de l'élément rotatif et l'éléments rotatif, y compris la soupape de sortie, de préférence l'ensemble du dispositif de fermeture, y compris la vanne de sortie, peut être enlevés par détachement de cette liaison.

15. Couvercle pour un faitout à surpression, en particulier présentant les caractéristiques du couvercle du faitout à pression selon au moins l'une quelconque des revendications précédentes, le couvercle (2) comportant une plaque de couvercle (20) avec une ouverture de sortie et un dispositif de fermeture (3) actionnable manuellement avec un élément rotatif fixé de façon rotative sur la plaque de couvercle (20), un récipient (1) pouvant être encliqueté avec le couvercle (2) posé dessus pour le verrouillage par rotation de l'élément rotatif, et le couvercle présentant une soupape de sortie (4), laquelle est fixée sur l'élément rotatif, de sorte que la soupape de sortie (4) est également entraînée en rotation en cas de rotation de l'élément rotatif, et la soupape de sortie présentant un dispositif d'actionnement avec lequel une partie de la vanne peut être déplacée pour l'ouverture et la fermeture de la soupape, et la partie de la soupape pouvant être comprimée dessus de façon étanche sur l'ouverture de sortie au moyen du dispositif d'actionnement pour la fermeture de la soupape et empêchant ou tout du moins rendant difficile ainsi en même temps un mouvement de rotation de l'élément rotatif et pouvant être déplacée pour l'ouverture à partir de cette ouverture de sortie, de sorte que de la vapeur peut s'échapper du faitout et un mouvement de rotation de l'élément rotatif pour le déverrouillage du couvercle est rendu possible.
